# EUROPÄISCHE PATENTSCHRIFT

(11) **EP 4 005 866 B1**
(45) Veröffentlichungstag und Bekanntmachung des Hinweises auf die Patenterteilung: **12.07.2023**
(21) Anmeldenummer: 20210712.4
(22) Anmeldetag: 30.11.2020
(51) Int. Cl.: B60N 2/07, B60N 2/90, B60N 2/56, B60R 16/027, B60R 21/015, B60R 16/023, B60R 16/03, B60N 2/02

(54) **SITZLÄNGSVERSTELLVORRICHTUNG, VERFAHREN ZUM VERSTELLEN EINES SITZES UND KRAFTFAHRZEUG MIT EBENSOLCHER SITZLÄNGSVERSTELLVORRICHTUNG**
SEAT LONGITUDINAL ADJUSTMENT DEVICE, METHOD TO ADJUST A SEAT AND VEHICLE WITH SUCH A SEAT LONGITUDINAL ADJUSTMENT DEVICE.
DISPOSITIF DE RÉGLAGE LONGITUDINAL DU SIÈGE, MÉTHODE POUR AJUSTER UN SIÈGE, ET VÉHICULE AVEC UN TEL DISPOSITIF DE RÉGLAGE LONGITUDINAL DU SIÈGE.

(43) Veröffentlichungstag der Anmeldung: 01.06.2022
(73) Patentinhaber: IMS Gear SE & Co. KGaA, 78166 Donaueschingen (DE)
(72) Erfinder: Werschler, Marco, 78315 Radolfzell am Bodensee (DE); Teichmann, Robin, 78467 Konstanz (DE); Mittelbach, Marcel, 79859 Schluchsee (DE); Zahn, Patrick, 78073 Bad Dürrheim (DE)
(74) Vertreter: Westphal, Mussgnug & Partner Patentanwälte mbB

(56) Entgegenhaltungen:
- US-A1- 2019 351 794
- US-A1- 2020 189 511
- US-A1- 2020 194 936
- US-B2- 9 479 220

## Beschreibung

Die vorliegende Erfindung betrifft eine Sitzlängsverstellvorrichtung mit den Merkmalen des Patentanspruchs 1, ein Verfahren zum Verstellen eines Sitzes in einer Längsachse eines Kraftfahrzeugs mit den Merkmalen des Patentanspruchs 15 sowie ein Kraftfahrzeug mit den Merkmalen des Patentanspruchs 17. Sitzlängsverstellvorrichtungen sind aus dem Stand der Technik in unterschiedlichen Ausgestaltungen vorbekannt und werden verbreitet zum Verstellen der Position eines Sitzes in einer Längsachse, welche der Fahrzeuglängsachse entspricht, in Kraftfahrzeugen verwendet. Sitzlängsverstellvorrichtungen wirken typischerweise mit einer an einem Chassis festgelegten Schiene und einem innerhalb dieser angeordneten Schlitten zusammen, wobei der Schlitten mittels einer Antriebseinrichtung motorisch verfahrbar ist und mit dem Sitz gekoppelt ist. Das Verstellen des Schlittens erfolgt im Stand der Technik typischer Weise mittels einer Spindel, welche innerhalb der Oberschiene angeordnet ist und an ihrem jeweiligen ersten Ende und zweiten Ende abgestützt ist.

Derartige Sitzlängsverstellvorrichtungen sind beispielsweise aus der DE 10 2006 052 936 A1 und US 2020189511 A1 bekannt.

Es hat sich gezeigt, dass die aus dem der Technik bekannten Sitzlängsverstellvorrichtungen für neuartige Innenraumkonzepte von Kraftfahrzeugen Nachteile aufweisen. Es werden zur Realisierung der neuartigen Innenraumkonzepte große Verfahrwege und höhere Verfahrgeschwindigkeiten benötigt. Herkömmliche Sitzlängsverstellvorrichtungen bilden häufig durch in den Raum stehende Komponenten Gefahrenstellen.

Hier setzt die vorliegende Erfindung an.

Die vorliegende Erfindung widmet sich der Aufgabe, eine zweckmäßigerweise verbesserte Sitzlängsverstellvorrichtung vorzuschlagen, die zur Realisierung neuartiger Innenraumkonzepte besonders lange Verfahrwege ermöglicht und keine von dem Chassis herausragende Komponenten aufweist, von denen eine potentielle Gefahr ausgehen könnte. Auch soll die vorliegende Erfindung zu einer Gewichtsreduktion beitragen.

Diese Aufgaben werden durch die Sitzlängsverstellvorrichtung den Merkmalen des Patentanspruchs 1, sowie dem Verfahren zum Verstellen eines Sitzes eines Kraftfahrzeugs mit den Merkmalen des Patentanspruchs 15 sowie einem Kraftfahrzeug mit den Merkmalen des Patentanspruchs 17 gelöst.

Weitere vorteilhafte Ausgestaltungen der vorliegenden Erfindung werden in den Unteransprüchen angegeben.

Die erfindungsgemäße Sitzlängsverstellvorrichtung mit den Merkmalen des Patentanspruchs 1 weist mindestens eine entlang einer Längsachse verlaufende Schiene und mindestens einen Schlitten mit einer elektrischen Antriebseinrichtung auf, durch die der Schlitten entlang der Längsachse der mindestens einen Schiene beweglich ist.

Darüber hinaus weist die erfindungsgemäße Sitzlängsverstellvorrichtung weiterhin eine erste Steuereinheit und mindestens eine zweite Steuereinheit auf, wobei die erste Steuereinheit unbeweglich oder feststehend gegenüber der mindestens einen Schiene angeordnet ist und die mindestens eine zweite Steuereinheit an dem mindestens einen Schlitten angeordnet ist und insofern mit diesem mindestens einen Schlitten beweglich ist. Weiterhin sind die erste Steuereinheit und die mindestens eine zweite Steuereinheit über einen Leiter verbunden, der mit einer Spannungsquelle verbunden werden kann, die den Leiter mit einer Versorgungsspannung bestromt. Erfindungsgemäß ist dabei weiterhin vorgesehen, dass die mindestens eine zweite Steuereinheit die Antriebseinrichtung ansteuern kann, und dass die erste Steuereinheit und die mindestens eine zweite Steuereinheit über ein auf die Versorgungsspannung aufmodulierbares Kommunikationssignal kommunizieren.

Die vorliegende Erfindung beruht auf der Idee, dass die erste Steuereinheit und die mindestens eine zweite Steuereinheit über den einen Leiter via Powerline kommunizieren. Sowohl die Spannungsversorgung der elektrischen Antriebseinrichtung als auch mögliche weitere elektrische Geräte, die sich in oder an dem Sitz befinden, können über diesen einen Leiter mit Spannung versorgt werden, wobei weiterhin Steuerbefehle zum Ansteuern der elektrischen Antriebseinrichtung als auch der weiteren elektrischen Geräte übertragen werden können. Die Übertragung kann uni- oder bidirektional erfolgen.

Durch die vorliegende Erfindung kann auf ein Schleppkabel zwischen der mindestens einen Schiene und dem dazugehörigen Schlitten vollständig verzichtet werden. Schleppkabel stellen nicht nur ein gefahrbegründendes Hindernis dar, sondern sind anfällig gegenüber Beschädigungen. Bei derzeitigen Fahrzeugen umfassen die Schleppkabel eine Vielzahl von Leitern, weshalb die vorliegende Erfindung zu einer erheblichen Gewichtsreduzierung beitragen kann.

Die Spannungsquelle kann das Bordnetz eines Kraftfahrzeugs sein, welches typischerweise mit Gleichspannung betrieben wird. Verbreitet sind derzeit Nennspannungen zwischen 12-48 V, jedoch weisen insbesondere elektrische Kraftfahrzeuge teileweise deutlich höhere Nennspannungen von bis zu 220 V, 400 V oder 900 V und mehr auf. Höhere Nennspannungen ermöglichen eine Querschnittsreduzierung der Leiter und folglich eine Gewichts- und Kostenersparnis.

Der eine Leiter bildet den Spannungsleiter und ist auf Potential während weiterhin ein Null-Leiter oder Neutralleiter vorgesehen sein kann, der an dem Chassis bzw. der Schiene und dem Schlitten anliegt und dessen elektrisches Potential nahe dem Erdpotential liegt. Der eine Leiter ist bevorzugt ausschließlich ein Leiter und ist gegenüber dem Null-Leiter oder Neutralleiter elektrisch entkoppelt.

Gemäß einer bevorzugten Weiterbildung der vorliegenden Erfindung weist die mindestens eine Schiene mindestens ein Vortriebsmittel auf, welches mit der Antriebseinrichtung zur Erzeugung eines Vorschubs in der Längsachse zusammenwirken kann. Bevorzugt sind bzw. ist die mindestens eine Schiene und/oder das mindestens eine Vortriebmittel in eine Aufnahme eingelassen, wobei die Aufnahme vorzugsweise eine Ausnehmung sein kann, die nut- oder taschenförmig in eine Bodenebene eingelassen ist. Parallel zu der Längsachse kann in der Aufnahme - bevorzugt zurückspringend oder in einem Hinterschneidungsbereich - das mindestens eine Vortriebmittel angeordnet sein. Das mindestens eine Vortriebmittel kann dabei noch weiter bevorzugt in einer Ebene abgewinkelt, bevorzugt näherungsweise senkrecht, zu der Bodenebene angeordnet sein.

Darüber hinaus hat es sich als vorteilhaft erwiesen, wenn der Schlitten in die Aufnahme ragt oder der Schlitten in der Aufnahme angeordnet ist. Bevorzugt ist der Schlitten zumindest bereichsweise zwischen zwei gegenüberliegenden Längsseiten der Aufnahme angeordnet, wobei an der wenigstens einer der zwei gegenüberliegenden Längsseiten die Vortriebmittel angeordnet sein können. Der Schlitten kann über einen Mitnehmer aus der Aufnahme in einen Fahrgastraum des Kraftfahrzeuges ragen und mit dem Sitz oder einer Oberschiene des Sitzes verbunden werden.

Weiterhin hat es sich als vorteilhaft erwiesen, wenn das mindestens eine Vortriebmittel mindestens eine Zahnstange umfasst und dass die Antriebseinrichtung zur Erzeugung eines Vorschubs in der Längsachse mindestens zwei Vortriebelemente aufweist, die nacheinander in die Zahnstange eingedrückt oder ausgedrückt werden. Ein derartiger Linearantrieb ist beispielsweise aus der EP 19 178 264, PCT/EP 2020 / 065448. PCT/EP 2020 / 065453 und PCT/EP 2020 / 065454 bekannt, und ermöglicht es, sowohl große Verfahrwege und große Fahrgeschwindigkeiten bei einer für Kraftfahrzeuge notwendigen Bruchsicherheit zu realisieren.

Die wenigstens zwei Vortriebzähne sind bevorzugt quer zur Längsachse hubbeweglich angeordnet und sind mit einer Antriebswelle der elektrischen Antriebseinrichtung derart trieblich gekoppelt, dass die mindestens zwei Vortriebzähne mindestens eine zyklische Hubbewegung im Verlauf einer Umdrehung der Antriebswelle vornehmen. Zum Erzeugen eines Vortriebs in der Längsachse tauchen die Vortriebzähne in die Zahnstange ein- und aus. Anderes ausgedrückt wird der jeweilige Vortriebzahn zwischen jeweils zwei Zähne der Zahnstange ein- und ausgedrückt. Die zyklische Hubbewegung der wenigstens zwei Vortriebzähne erfolgt bevorzugt mit einem Phasenversatz, wobei hier und im Nachfolgenden unter einem Phasenversatz ein Ein- und Austauchen der wenigstens zwei Vortriebzähne in die Zahnstange zu unterschiedlichen Drehwinkeln der Antriebswelle verstanden wird.

Weiterhin wird hier und im Nachfolgenden unter einer zyklischen Hubbewegung ein Bewegungsablauf eines Teils oder eines vollständigen Zyklus des jeweiligen Vortriebzahns verstanden, in welchem der Vortriebzahn von einem Ausgangspunkt einmal in die Zahnstange eintaucht und einmal vollständig aus der Zahnstange austaucht und zum Ausgangspunkt zurückkehrt und vice versa. Der jeweilige Vortriebzahn kann während einer Umdrehung der Antriebswelle eine oder mehrere vollständige Perioden durchlaufen, wobei die Anzahl der Perioden immer einer ganzen Zahl entspricht.

Beim Eintauchen des jeweiligen Vortriebzahns in die Zahnstange kommen die Zähne und die Vortriebzähne in einen Wirkkontakt, woraus ein Vortrieb in der Längsachse resultiert. Zu diesem Zweck taucht der jeweilige Vortriebzahn in die Zahnstange bzw. in einen Zahnzwischenraum zwischen zwei Zähnen ein, wobei der Vortriebzahn und der Zahn an einer Reibfläche in Wirkkontakt kommen, die nach Art einer Keilfläche ausgebildet ist, woraus der Vortrieb resultiert. Hierzu ist es erforderlich, dass wenigstens einer die Zähne und/oder die Vortriebzähne eine Reibfläche aufweisen, die nach Art einer Keilfläche ausgebildet ist.

Weiterhin hat es sich als vorteilhaft erwiesen, wenn der mindestens eine Leiter mindestens eine in der Längsachse der Schiene ausgebildete Leiterschiene und einen an dem Schlitten ausgebildeten Gleit- oder Schleifkontakt umfasst, die in elektrischer Wirkverbindung stehen. Die Leiterschiene ist gegenüber dem Chassis des Kraftfahrzeugs bzw. der Schiene elektrisch isoliert angeordnet und weist eine elektrisch kontaktierbare Kontaktfläche auf, welche bevorzugt in die Aufnahme gerichtet ist. Der Gleit- oder Schleifkontakt kann darüber hinaus Mittel aufweisen, durch die der Gleit- oder Schleifkontakt stromabnehmerförmig gegen die Leiterschiene gedrückt wird, um eine durchgehende elektrische Kontaktierung zu gewährleisten. Durch eine derartige Ausgestaltung des Leiters kann auf eine Schleppkabelverbindung zwischen der Schiene und dem Schlitten verzichtet werden. Auch an der Leiterbahn kann durch die Protokollierung eingespart werden. Potenzielle Gefahrenquellen durch Schleppkabel werden vermieden und der Verfahrweg kann beliebig lang ausgestaltet werden.

Gemäß einer bevorzugten Weiterbildung der vorliegenden Erfindung ist die Leiterschiene in der Längsachse an der mindestens einen Schiene, insbesondere in der Aufnahme benachbart zu der Zahnstange, angeordnet. Insbesondere ist es bevorzugt, wenn die mindestens eine Leiterschiene in der Aufnahme in einem Hinterschneidungsbereich angeordnet ist, wodurch die mindestens eine Leiterschiene vor einer unbeabsichtigten Kontaktierung geschützt ist.

Es ist auch vorteilhaft, wenn die Versorgungsspannung ein Gleichstrom ist, der unmittelbar aus dem Bordnetz des Kraftfahrzeugs entnommen werden kann.

Nach Maßgabe einer weiteren vorteilhaften Ausgestaltung ist das aufmodulierte Kommunikationssignal ein frequenz- und/oder phasenmoduliertes Signal.

Darüber hinaus ist es vorteilhaft, wenn die erste Steuereinheit eine Schnittstelle zum Empfang von Steuerbefehlen aufweist, vorzugsweise von einer ECU (electronic control unit) des Kraftfahrzeuges via CAN- oder LIN-Bus. Der CAN-Bus (Controller Area Network) ist ein serielles Bussystem und der LIN-Bus (Local Interconnect Network) ein serielles Kommunikationssystem, welche typischerweise für die Vernetzung von Sensoren und Aktoren in einem Kraftfahrzeug verwendet werden. Beispielsweise kann die erste Steuereinheit über die Schnittstelle Steuerbefehle zum Verstellen des Schlittens auf eine vorgegebene Position in der Längsachse empfangen oder Steuerbefehle für weitere an oder in dem Sitz angeordnete elektrische Geräte, wie beispielsweise Sitzheizung, Sitzkühlung, Lautsprecher, Kopfstütze, Lordosenstützenverstellung, Sitzhöhenverstellung, Lehnenverstellung und/oder Massageeinrichtungen. Die weiteren elektrischen Geräte können auch weitere Aktoren umfassen, die beispielsweise ein Drehen des Sitzes um eine Drehachse senkrecht zu einer Ebene der Schiene ermöglichen. Dadurch können die Sitze nicht nur in der Längsachse der Schiene bzw. des Kraftfahrzeuges verstellt werden, sondern ebenfalls deren Ausrichtung. Die Sitze können daher in einigen Anwendungen nach hinten oder zur Seite ausgerichtet werden.

Diese Steuerbefehle werden durch die erste Steuereinheit auf die Versorgungsspannung als Kommunikationssignal aufmoduliert und mittels des Leiters an die mindestens eine zweite Steuereinheit übertragen. Die mindestens eine zweite Steuereinheit kann das Kommunikationssignal demodulieren und die Steuerbefehle weiterverarbeiten.

Weiterhin hat es sich als vorteilhaft erwiesen, wenn die erste Steuereinheit eine Master-Steuerung ist und/oder die mindestens eine zweite Steuereinheit mindestens eine Slave-Steuerung für die Antriebseinrichtung umfasst. Der eine Leiter stellt für die Kommunikation zwischen der Master-Steuerung und der mindestens einen Slave-Steuerung einen einzigen gemeinsamen Übertragungskanal zur Verfügung. Die Master-Steuerung kann durch die hierarchische Zugriffsverwaltung alleinig unaufgefordert über den einen Leiter kommunizieren, während dessen die Slave-Steuerungen ausschließlich nach Aufforderung durch die Master-Steuerung über den einen Leiter kommunizieren dürfen. Dabei kann beispielsweise Polling verwendet werden um zyklisch die Slave-Steuerungen abzufragen und/oder anzusprechen.

Für die weiteren elektrischen Geräte können jeweils weitere Slave-Steuerungen vorgesehen sein.

Auch kann es vorteilhaft sein, wenn die mindestens eine zweite Steuereinheit mindestens ein Sensorsignal an die erste Steuereinheit überträgt. Beispielsweise kann das mindestens eine Sensorsignal ein Funktionszustand des elektrischen Antriebes, oder ein Funktionszustand der weiteren elektrischen Geräte sein. Auch kann das mindestens eine Sensorsignal ein Zustand eines Gurtes, eine Personenerkennung, Airbag oder der gleichen sein.

Weiterhin hat es sich als vorteilhaft erwiesen, wenn die elektrische Antriebseinrichtung einen Encoder aufweist, und dass mittels des Encoders die Position des Schlittens auf der Schiene in der Längsachse ermittelt werden kann. Alternativ oder ergänzend kann darüber hinaus die Position des Schlittens auf der Schiene der Längsachse über eine Laufzeitmessung des Kommunikationssignals erfolgen. Eine Zwischenspeicherung der Position kann in einem nichtflüchtigen Speicher der ersten und/oder der mindestens einen zweiten Steuereinheit oder in dem Encoder erfolgen. Einlernen oder Referenzfahrten können sodann überflüssig sein.

Ein weiterer Aspekt der vorliegenden Erfindung betrifft ein Verfahren zum Verstellen eines Sitzes mit einer Sitzlängsverstellvorrichtung, insbesondere mit einer zuvor beschriebenen Sitzlängsverstellvorrichtung, gekennzeichnet durch die Verfahrensschritte:
- Empfangen eines Steuersignals durch eine erste Steuereinheit,
- Aufmodulieren des Steuersignals als ein Kommunikationssignal auf die Versorgungsspannung,
- Empfangen und Demodulieren des Kommunikationssignals durch die mindestens eine zweite Steuereinheit, und
- Umsetzen des Steuersignals durch Ansteuern der elektrischen Antriebseinrichtung zum Verfahren des Schlittens in der Längsachse der Schiene durch die mindestens eine zweite Steuereinheit mit der Versorgungsspannung.

Bevorzugt wird das Steuersignal von der ersten Steuereinheit als ein Kommunikationssignal auf eine DC-Versorgungsspannung, insbesondere auf den einen Leiter, aufmoduliert und von der ersten Steuereinheit zu der mindestens einen zweiten Steuereinheit übertragen. Die erste Steuereinheit ist dabei ortsfest mit dem Chassis des Kraftfahrzeuges verbunden bzw. unbeweglich gegenüber der Schiene angeordnet und die mindestens eine zweite Steuereinheit ist ortsfest mit dem Schlitten der mindestens einen Schiene verbunden.

Eine bevorzugte Weiterbildung des Verfahrens sieht vor, dass eine Position des Schlittens auf der mindestens einen Schiene in der Längsachse anhand einer Signallaufzeit des aufmodulierten Steuersignals erfolgt, und/oder dass eine Position des Schlittens in der Längsachse auf der Schiene anhand eines Encoders der elektrischen Antriebseinrichtung bestimmt wird.

Ein weiterer Aspekt der vorliegenden Erfindung betrifft ein Kraftfahrzeug mit mindestens einer zuvor beschriebenen Sitzlängsverstellvorrichtung.

Bevorzugt weist das Kraftfahrzeug einen Sitz, weiter bevorzugt mindestens zwei Sitze, und mindestens eine Sitzlängsverstellvorrichtungen auf.

Die Sitzlängsverstellvorrichtung weist weiterhin bevorzugt für jeden Sitz einen Schlitten, eine Schiene und mindestens eine zweite Steuereinheit auf. Die erste Steuereinheit ist mit der mindestens einen zweiten Steuereinheit für den jeweiligen mindestens einen Sitz bevorzugt über den Leiter mit der Stromquelle, also dem Bordnetz, verbunden. Die bevorzugt gemeinsame erste Steuereinheit der Sitzlängsverstellvorrichtung kann mittels der Schnittstelle mit der ECU, bzw. dem Kraftfahrzeug-Steuergerät verbunden sein und kommuniziert mit den zweiten Steuereinheiten über den Leiter. Alternativ kann die Sitzlängsverstellvorrichtung auch für jeden Sitz eine erste Steuereinheit aufweisen.

Die ECU kann zeitgleich Steuerbefehle an die gemeinsame erste Steuereinheit senden. Somit können mehrere Sitze zeitgleich und auch synchron in einem Kraftfahrzeug zur Realisierung neuartiger Sitzkonzepte verstellt werden.

Nachfolgend wird unter Bezugnahme auf die begleitende Zeichnung ein Ausführungsbeispiel einer erfindungsgemäßen Sitzlängsverstellvorrichtung im Detail beschrieben. Es zeigen:
- Figur 1: eine perspektivische, teilweise geschnittene Darstellung der Sitzlängsverstellvorrichtung,
- Figur 2: eine stark vereinfachte Darstellung eines Schaltplans der Sitzlängsverstellvorrichtung mit einer ersten Steuereinheit und einer zweiten Steuereinheit gemäß Figur 1,
- Figur 3: eine Weiterbildung der zweiten Steuereinheit mit einem Encoder zur Erfassung der Position des Schlittens in der Längsachse,
- Figur 4: eine zweite Weiterbildung der zweiten Steuereinheit, wobei weitere Geräte an der zweite Steuereinheit angeschlossen sind, und
- Figur 5: ein stark vereinfachtes und schematisches Schaltbild eines Kraftfahrzeugs mit zwei verstellbaren Sitzen und einer Sitzlängsverstellvorrichtung, wobei die Sitzlängsverstellvorrichtung eine gemeinsame erste Steuereinheit aufweist, die mit den zweiten Steuereinheiten kommuniziert.

Nachfolgend werden gleiche oder funktional gleiche Bauteile mit gleichen Bezugszeichen gekennzeichnet. Der Übersichtlichkeit halber sind in den einzelnen Figuren nicht alle gleichen oder funktional gleichen Teile mit einer Bezugsziffer versehen.

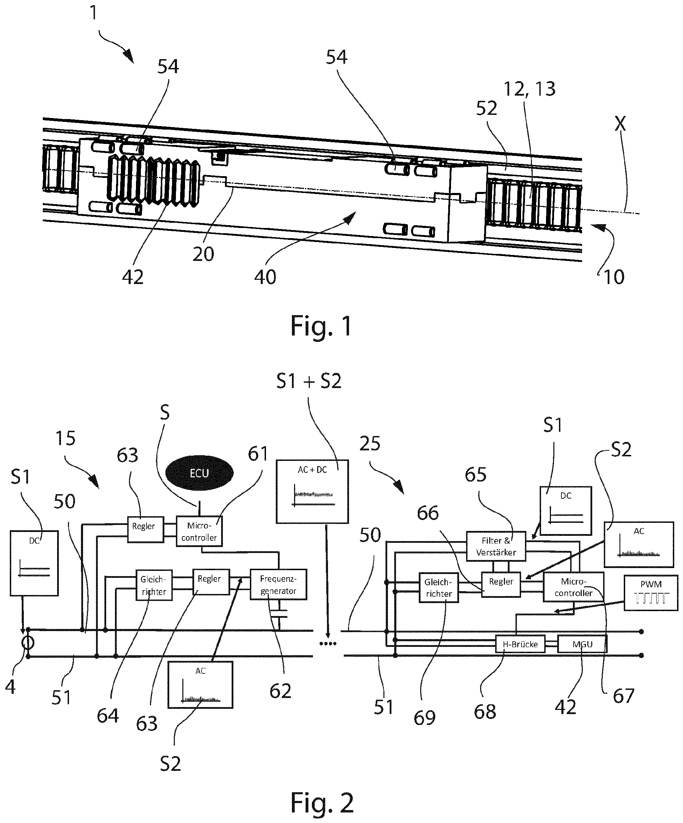

Figur 1 zeigt eine erfindungsgemäße Sitzlängsverstellvorrichtung 1, aufweisend eine Schiene 10, einen Schlitten 20, eine erste Steuereinheit 15, eine zweite Steuereinheit 25 und einen Leiter 50. Der Schlitten 20 ist an der Schiene 20 entlang einer Längsachse X entlang angeordnet.

Die Schiene 10 umfasst eine quaderförmige Aufnahme 11, die einen Raum - zumindest teilweise - umschließt. Auf zwei dem Raum zugewandten diametralen Längsseiten kann jeweils ein Vortriebmittel 12 - bevorzugt in Form einer Zahnstange 13 - angeordnet sein. Das Vortriebmittel 12 kann aus einer Vielzahl von Zähnen gebildet sein, die bevorzugt äquidistant entlang der Längsachse X angeordnet sind. Zwischen jeweils zwei Zähnen wird ein entsprechender Zahnzwischenraum ausgebildet.

Der Schlitten 20 kann in der Aufnahme 11 angeordnet sein bzw. in die Aufnahme 11 ragen.

Wie weiter unter Bezugnahme auf Figur 1 ersichtlich ist, weist der Schlitten 20 ein Gehäuse auf, das eine elektrische Antriebseinrichtung 40 mit einem (nicht dargestellten) elektrischen Antrieb 42 aufnehmen kann.

Die erste Steuereinheit 15 ist ortsfest zu der Schiene 10 bzw. einem Chassis des Kraftfahrzeugs angeordnet und die zweite Steuereinheit 25 ist gemeinsam mit dem Schlitten 20 in der Längsachse X beweglich.

Die erste Steuereinheit 15 und die zweite Steuereinheit 25 sind über den Leiter 50 miteinander verbunden. Der Leiter 50 kann mit einer Spannungsquelle verbunden sein, welche bevorzugt in dem Kraftfahrzeug das DC-Bordnetz ist. Die Spannungsquelle 4 kann den Leiter mit einer Versorgungsspannung S1 bestromen. Der Leiter 50 ist auf Potential. Ein Nullleiter 51 kann vorgesehen sein, der entweder kabelgebunden ist oder an der Masse der Sitzlängsverstellvorrichtung 1 bzw. des Kraftfahrzeuges anliegt.

Weiterhin weist die erste Steuereinheit 15 eine Schnittstelle auf, durch die Steuerbefehle, beispielsweise durch die ECU bzw. das Steuergerät des Kraftfahrzeugs, empfangen werden können. Bevorzugt werden die Steuerbefehle bzw. Steuersignale S über einen CAN-, LIN-Bus oder Flex-Ray empfangen.

Die erste Steuereinheit 15 kann die über die Schnittstelle empfangenen Steuersignale S auf die Versorgungsspannung S1 als ein Kommunikationssignal S2 aufmodulieren und an die zweite Steuereinheit 25 über den Leiter 50 übertragen. Dieser Signalgang ist in Figur 2 als "S1 + S2" illustriert.

Die zweite Steuereinheit 25 kann über den Leiter 50 das Kommunikationssignal S2 empfangen, demodulieren und den Steuerbefehl verarbeiten. Die zweite Steuereinheit 25 ist hierzu mit dem elektrischen Antrieb 42 verbunden und kann die empfangenen Steuersignale S in eine Bewegung des elektrischen Antriebs 42 umsetzen.

Der elektrische Antrieb 42 kann eine (nicht dargestellte) Antriebswelle antreiben. Weiterhin weist die Antriebseinrichtung 40 mehrere Vortriebselemente 44 auf, die derart mit dem Antrieb 42 gekoppelt sind, dass die mindestens zwei Vortriebelemente 44 mindestens eine zyklische Bewegung im Verlauf einer Umdrehung der Antriebswelle vornehmen und zum Erzeugen eines Vortriebs in der Längsachse X in die Vortriebmittel 12 ein- und austauchen bzw. anders gesagt zwischen jeweils zwei Zähne der Zahnstange ein- und austauchen können. Die zyklische Hubbewegung der wenigstens zwei zahnförmigen Vortriebelemente 44 erfolgt bevorzugt nacheinander, also mit einem Phasenversatz, wobei hier und im Nachfolgenden unter einem Phasenversatz ein Ein- und Austauchen der wenigstens zwei Vortriebelemente 44 in die Vortriebmittel 12 zu unterschiedlichen Drehwinkeln der Antriebswelle verstanden wird.

Die Aufnahme 11 kann auf in der Längsachse X gegenüberliegenden Seiten angeordnete Endbereiche Endanschläge aufweisen, durch die der maximale Verfahrensweg des Schlittens 20 innerhalb des Raums vorgegeben wird.

Der Leiter 50 umfasst eine Leiterschiene 52 und mindestens einen Gleit- oder Schleifkontakt 54 zum Bilden einer elektrischen Verbindung zwischen dem an dem Schlitten 20 in der Längsachse X beweglich angeordneten Leiterabschnitt und dem an der Schiene 10 in der Längsachse unbeweglich angeordneten Leiterabschnitt.

Die Leiterschiene 52 weist eine auf der dem Raum zugewandten Seite elektrische Kontaktfläche auf, und erstreckt sich vorzugsweise zwischen den beiden Endbereichen der Aufnahme 11 parallel zu der Längsachse.

Weiterhin ist aus Figur 1 ersichtlich, dass die Gleit- oder Schleifkontakte 54 von dem Gehäuse abstehen. Die Gleit- oder Schleifkontakte 54 können durch Mittel gegen die Leiterschiene 52 zum elektrischen Kontaktieren der Leiterschiene 52 vorgespannt sein. Die Gleit- oder Schleifkontakte 54 sind mit der zweiten Steuereinheit 25 verbunden und ermöglichen eine Kommunikation zwischen der ersten Steuereinheit 15 und der zweiten Steuereinheit 25.

Der Nullleiter 51 kann in analoger Weise zu dem Leiter 50 mit einer Leiterschiene und Gleit- oder Schleifkontakten ausgebildet sein. In dem dargestellten Ausführungsbeispiel ist der Nullleiter auf der dem Leiter 50 gegenüberliegenden Seite der Aufnahme 11 angeordnet.

In Figur 2 ist ein schematisches Schaltbild der ersten Steuereinheit 15 und zweiten Steuereinheit 25 dargestellt.

Die erste Steuereinheit 15 ist eine Master-Steuerung, die mit der zweiten Steuereinheit 25 über den Leiter 50 kommuniziert, wobei die zweite Steuereinheit 25 eine oder mehrere Slave-Steuerungen aufweisen kann, die die Verbraucher, also den elektrischen Antrieb, oder weitere elektrische Geräte wie Sitzheizung oder -kühlung, Medienwiedergabegeräte, insbesondere für ein Bord-Entertainment, Massageeinrichtungen oder weitere Stellantriebe steuert.

Die erste Steuereinheit 15 umfasst zum Empfang und Verarbeitung des Steuersignals S von der ECU einen Micro-Controller 61 einen Frequenzgenerator 62, einen Regler 63 und ein Gleichrichter 64. Der Frequenzgenerator 62 der ersten Steuereinheit 15 ist konfiguriert ein dem Steuersignal S entsprechendes Kommunikationssignal S2 zu erzeugen, das auf die auf dem Leiter 50 anliegende Versorgungsspannung S1 aufmoduliert werden kann.

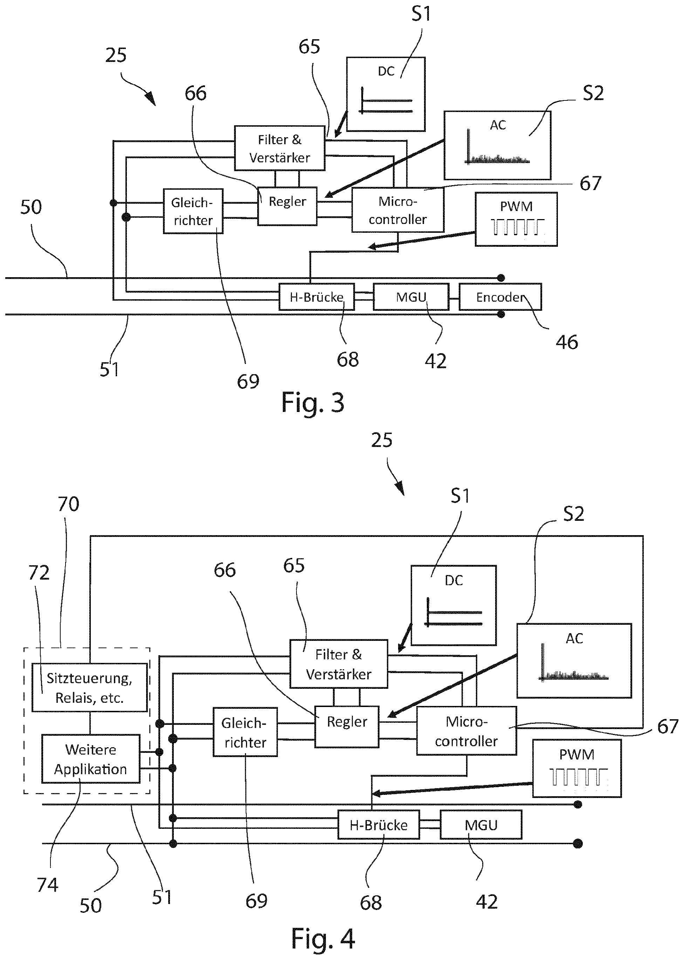

Die zweite Steuereinheit 25 kann Filter und/oder Verstärker 65, einen Regler 66, Micro-Controller 67, H-Brücken 68 und einen Gleichrichter 69 umfassen, um das Kommunikationssignal zu demodulieren und über eine entsprechende Schaltung mit einem Mikro-Controller und der H-Brücke, bevorzugt via einer Pulsweitenmodulation (PWM), den elektrischen Antrieb 42 steuern. Auch kann eine Steuerung über ein Relais erfolgen Zur Bestimmung der Position des Schlittens 20 in der Längsachse X der Schiene 10 kann, wie in Figur 3 gezeigt, der elektrische Antrieb 42 einen Encoder 46 aufweisen, der die Umdrehungen des elektrischen Antriebs 42 detektiert. Auch kann eine Signallaufzeit des Kommunikationssignals S2 zur Bestimmung der Position verwendet werden.

Eine Weiterbildung der zweiten Steuereinheit 25 ist in Figur 4 gezeigt. Die zweite Steuereinheit 25 kann mehrere Slave-Steuerungen aufweisen, durch die weitere elektrische Geräte 70, wie beispielsweise eine Sitzheizung, eine Massagefunktion, weitere verstellbare Einheiten und dergleichen angesteuert werden können. Die weiteren elektrischen Geräte 70 werden ebenfalls durch den Leiter 50 mit einer Versorgungsspannung S1 bestromt, wobei die beispielsweise eine Ansteuerung einer Applikation 74, wie Massageeinrichtung, Sitzheizung oder -kühlung, o.Ä., durch ein Relais 72 erfolgen kann.

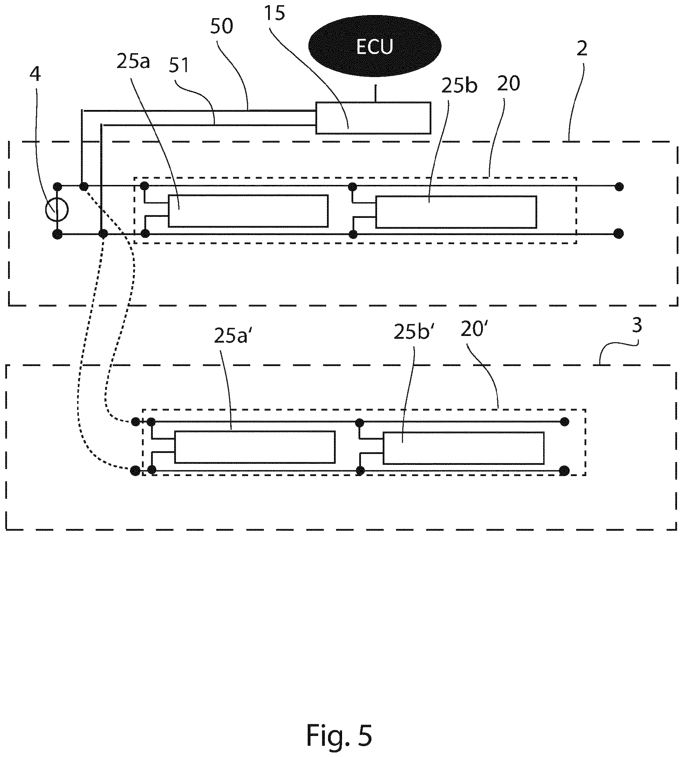

Figur 5 zeigt ein stark vereinfachtes und schematisches Schaltbild eines Kraftfahrzeugs mit zwei verstellbaren Sitzen 2, 3 und einer Sitzlängsverstellvorrichtung 1

Die Sitzlängsverstellvorrichtung 1 gemäß diesem Ausführungsbeispiel kann die zwei Sitze 2 ,3 gleichzeitig oder zweitversetzt verstellen. Für den jeweiligen Sitz 2, 3 umfasst die Sitzlängsverstellvorrichtung 1 eine Schiene 10, einen Schlitten 20, 20', mindestens eine zweite Steuereinheit 25, 25` und eine (nicht dargestellte) Antriebseinrichtung 40, 40`.

Weiterhin können, wie in Figur 5 gezeigt, mehrere zweite Steuereinheiten 25 vorgesehen sein, die mit den Bezugszeichen 25a, 25b, 25a` und 25b` kenntlich gemacht sind. Beispielsweise können die zweiten Steuereinheiten 25a, 25a` die jeweiligen Antriebseinrichtung 40, 40` ansteuern und die zweiten Steuereinheiten 25a, 25a` weitere elektrische Geräte 70.

### Bezugszeichenliste

- 1: Sitzlängsverstellvorrichtung
- 10: Schiene
- 11: Aufnahme
- 12: Vortriebmittel
- 13: Zahnstange
- 15: erste Steuereinheit
- 25: zweite Steuereinheit
- 40: Antriebseinheit
- 42: Antrieb
- 44: Vortriebelement
- 46: Encoder
- 50: Leiter
- 51: Nullleiter
- 52: Leiterschiene
- 54: Schleifkontakt
- 61: Controller
- 62: Frequenzgenerator
- 63: Regler
- 64: Gleichrichter
- 65: Verstärker
- 66: Regler
- 67: Controller
- 68: H-Brücke
- 69: Gleichrichter
- 70: Geräte

- X: Längsachse

## Patentansprüche

1. Sitzlängsverstellvorrichtung (1), aufweisend
- eine entlang einer Längsachse (X) verlaufende Schiene (10),
- einen Schlitten (20) mit einer elektrischen Antriebseinrichtung (40), durch die der Schlitten entlang der Längsachse (X) der Schiene (10) beweglich ist, und
- eine erste Steuereinheit (15) und eine zweite Steuereinheit (25),
- wobei die erste Steuereinheit (15) gegenüber der Schiene (10) unbeweglich angeordnet ist und die zweite Steuereinheit (25) an dem Schlitten (20) angeordnet ist,
- wobei die erste Steuereinheit (15) und die zweite Steuereinheit (25) über einen elektrischen Leiter (50) verbunden sind, der von einer Spannungsquelle (4) mit einer Versorgungsspannung (S1) bestromt werden kann,
- wobei die zweite Steuereinheit (25) die Antriebseinrichtung (40) ansteuern kann, und
- wobei die erste Steuereinheit (15) und die zweite Steuereinheit (25) über ein auf die Versorgungsspannung aufmodulierbares Kommunikationssignal (S2) kommunizieren.

2. Sitzlängsverstellvorrichtung (1) nach Anspruch 1,
**dadurch gekennzeichnet, dass**
die Schiene (10) mindestens ein Vortriebmittel (12) aufweist, das mit der Antriebseinrichtung (40) zur Erzeugung eines Vorschubes in der Längsachse (X) zusammenwirken kann.

3. Sitzlängsverstellvorrichtung (1) nach Anspruch 1 oder 2,
**dadurch gekennzeichnet, dass**
das mindestens eine Vortriebmittel (12) in eine Aufnahme (11) eingelassen ist.

4. Sitzlängsverstellvorrichtung (1) nach Anspruch 3,
**dadurch gekennzeichnet, dass**
die Vortriebmittel (12) mindestens eine Zahnstange (13) umfassen, und dass die Antriebseinrichtung (40) zur Erzeugung eines Vorschubes in der Längsachse (X) mindestens zwei Vortriebelemente (42) aufweist, die nacheinander in die Zahnstange (13) ein- und ausgedrückt werden können.

5. Sitzlängsverstellvorrichtung (1) nach einem der vorgenannten Ansprüche,
**dadurch gekennzeichnet, dass**
der mindestens eine Leiter (50) mindestens eine in der Längsachse (X) der Schiene (10) ausgebildete Leiterschiene (52) und einen an dem Schlitten (20) ausgebildeten Gleit- oder Scheifkontakt (54) umfasst, die in elektrischer Wirkverbindung stehen.

6. Sitzlängsverstellvorrichtung (1) nach Anspruch 5,
**dadurch gekennzeichnet, dass**
die Leiterschiene (52) in der Längsachse X an der Schiene (10), insbesondere benachbart zu der Zahnstange (13), angeordnet ist.

7. Sitzlängsverstellvorrichtung (1) nach einem der vorgenannten Ansprüche,
**dadurch gekennzeichnet, dass**
die Versorgungsspannung ein Gleichstrom ist.

8. Sitzlängsverstellvorrichtung (1) nach einem der vorgenannten Ansprüche,
**dadurch gekennzeichnet, dass**
das aufmodulierte Kommunikationssignal (S2) ein frequenz- und/oder phasenmoduliertes Signal ist.

9. Sitzlängsverstellvorrichtung (1) nach einem der vorgenannten Ansprüche,
**dadurch gekennzeichnet, dass**
die erste Steuereinheit (15) eine Schnittstelle zum Empfang von Steuerbefehlen, vorzugsweise von einer ECU via CAN- oder LIN-Bus, aufweist.

10. Sitzlängsverstellvorrichtung (1) nach einem der vorgenannten Ansprüche,
**dadurch gekennzeichnet, dass**
die erste Steuereinheit (15) eine Master-Steuerung ist.

11. Sitzlängsverstellvorrichtung (1) nach einem der vorgenannten Ansprüche,
**dadurch gekennzeichnet, dass**
die zweite Steuereinheit (25) mindestens eine Slave-Steuerung für die Antriebseinrichtung (40) umfasst.

12. Sitzlängsverstellvorrichtung (1) nach einem der vorgenannten Ansprüche,
**dadurch gekennzeichnet, dass**
die zweite Steuereinheit (25) mindestens eine zweite Slave-Steuerung für eine Lordosenstützenverstellung, Sitzhöhenverstellung, Lehnenverstellung, Sitzheizung und/oder Massageeinrichtung aufweist.

13. Sitzlängsverstellvorrichtung (1) nach einem der vorgenannten Ansprüche,
**dadurch gekennzeichnet, dass**
die zweite Steuereinheit (25) Sensorsignale an die erste Steuereinheit (15) überträgt.

14. Sitzlängsverstellvorrichtung (1) nach einem der vorgenannten Ansprüche,
**dadurch gekennzeichnet, dass**
die Antriebseinrichtung (40) einen Encoder (46) aufweist, und dass mittels des Encoders (46) die Position des Schlittens (20) auf der Schiene (10) in der Längsachse (X) ermittelt wird, und/oder dass eine Erfassung der Position des Schlittens (20) auf der Schiene (10) in der Längsachse (X) über eine Laufzeitmessung des Kommunikationssignals (S2) erfolgt.

15. Verfahren zum Betreiben einer Sitzlängsverstellvorrichtung (1), insbesondere einer Sitzlängsverstellvorrichtung (1) mit den Merkmalen des Patentanspruchs 1, **gekennzeichnet durch** die Verfahrensschritte:
- Empfangen eines Steuersignals (S) durch die erste Steuereinheit (15);
- Aufmodulieren des Steuersignals (S) als ein Kommunikationssignal (S2) auf die Versorgungsspannung (S1) ;
- Empfangen und Demodulieren des Kommunikationssignals (S2) durch die zweite Steuereinheit (25), und
- Umsetzten des Steuersignals (S) durch Ansteuern der Antriebseinrichtung (40) zum Verfahren des Schlittens (20) in der Längsachse (X) der Schiene (10) durch die zweite Steuereinheit (25) mit der Versorgungspannung.

16. Verfahren nach Anspruch 15,
**dadurch gekennzeichnet, dass**
eine Erfassung einer Position des Schlittens (20) in der Längsachse (X) auf der Schiene (10) anhand einer Signallaufzeit des aufmodulierten Steuersignals (S1) erfolgt.

17. Kraftfahrzeug mit mindestens einer Sitzlängsverstellvorrichtung (1) nach einem der Ansprüche 1 bis 14.

## Claims

1. Seat length adjustment apparatus (1), comprising
- a track (10), extending along a longitudinal axis (X),
- a carriage (20), having an electric drive mechanism (40), by means of which the carriage is rendered moveable along the longitudinal axis (X) of the track (10), and
- a first control unit (15) and a second control unit (25),
- wherein the first control unit (15) is moveably arranged relative to the track (10) and the second control unit (25) is arranged on the carriage (25),
- wherein the first control unit (15) and the second control unit (25) are connected by means of an electrical conductor (50) which can be provided with electricity by a voltage source (4) having a supply voltage,
- wherein the second control unit (25) can control the drive mechanism (40), and
- wherein the first control unit (15) and the second control unit (25) communicate by means of a communication signal (S2) which can be modulated onto the supply voltage.

2. Seat length adjustment apparatus (1) in accordance with claim 1,
**characterized in that**
the track (10) comprises at least one means of propulsion (12) which can interact with the drive mechanism (40) to generate a forward movement along the longitudinal axis (X).

3. Seat length adjustment apparatus (1) in accordance with claim 1 or 2,
**characterized in that**
the at least one means of propulsion (12) are embedded in a receptacle (11).

4. Seat length adjustment apparatus (1) in accordance with claim 3,
**characterized in that**
the means of propulsion (12) include at least one gear rack (13), and **in that** the drive mechanism (40) comprises at least two propulsion elements (42) for generating a forward movement along the longitudinal axis (X), which can be consecutively pressed into and out of the gear rack (13).

5. Seat length adjustment apparatus (1) in accordance with any of the preceding claims,
**characterized in that**
the at least one conductor (50) includes a conductor rail (52) implemented in the longitudinal axis (X) of the track (10) and a sliding or wiping contact (54), implemented on the carriage (20), which are in operative electrical connection.

6. Seat length adjustment apparatus (1) in accordance with claim 5,
**characterized in that**
the conductor rail (52) is arranged on the track (10) in the longitudinal axis (X), in particular adjacent to the gear rack (13).

7. Seat length adjustment apparatus (1) in accordance with any of the preceding claims,
**characterized in that**
the supply voltage is a direct current.

8. Seat length adjustment apparatus (1) in accordance with any of the preceding claims,
**characterized in that**
the modulated communication signal (S2) is a frequency and/or phase modulated signal.

9. Seat length adjustment apparatus (1) in accordance with any of the preceding claims,
**characterized in that**
the first control unit (15) comprises an interface for receiving control commands, preferably from an ECU via CAN or LIN Bus.

10. Seat length adjustment apparatus (1) in accordance with any of the preceding claims,
**characterized in that**
the first control unit (15) is a master controller.

11. Seat length adjustment apparatus (1) in accordance with any of the preceding claims,
**characterized in that**
the second control unit (25) comprises at least one slave controller for the drive mechanism (40).

12. Seat length adjustment apparatus (1) in accordance with any of the preceding claims,
**characterized in that**
the second control unit (25) comprises at least one second slave controller for an adjusting of lumbar supports, an adjusting of a seat height, an adjustment of a backrest, for a seat heating and/or for a massage device.

13. Seat length adjustment apparatus (1) in accordance with any of the preceding claims,
**characterized in that**
the second control unit (25) transmits sensor signals to the first control unit (15).

14. Seat length adjustment apparatus (1) in accordance with any of the preceding claims,
**characterized in that**
the drive mechanism (40) comprises an encoder (46), and **in that**, by means of the encoder (46), the position of the carriage (20) on the track (10) in the longitudinal axis (X) is determined, and/or **in that** a determination of the position of the carriage (20) on the track (10) in the longitudinal axis (X) is carried out by means of a runtime measurement of the communication signal (S2).

15. Method for operating a seat length adjustment apparatus (1), in particular a seat length adjustment apparatus (1) having the features of claim 1, **characterized by** the following method steps:
- Receiving a control signal (S) with the first control unit (15);
- modulating the control signal (S) as a communication signal (S2) onto the supply voltage (S1);
- receiving and demodulating the communication signal (S2) with the second control unit (25), and
- implementing the control signal (S) by controlling the drive mechanism (40) to drive the carriage (20) along the longitudinal axis (X) of the track using the second control unit (25) and the supply voltage.

16. Method in accordance with claim 15,
**characterized in that**
the determination of the position of the carriage (20) in the longitudinal axis (X) on the track (10) is carried out based on a signal runtime measurement of the modulated control signal (S 1).

17. Motor vehicle having at least one seat length adjustment apparatus (1) in accordance with any of claims 1 to 14.

## Revendications

1. Dispositif de réglage longitudinal de siège (1) comprenant :
- un rail (10) orienté selon un axe longitudinal (X),
- un chariot (20) avec une installation d'entraînement électrique (40) qui déplace le chariot selon l'axe longitudinal (X) du rail (10), et
- une première unité de commande (15) ainsi qu'une seconde unité de commande (25),
* la première unité de commande (15) étant fixe par rapport au rail (10) et la seconde unité de commande (25) étant sur le chariot (20),
* la première unité de commande (15) et la seconde unité de commande (25) étant reliées par un conducteur électrique (50) alimenté à une tension d'alimentation (S1) par une source de tension (4),
* la seconde unité de commande (25) commande l'installation d'entraînement (40), et
* la première unité de commande (15) et la seconde unité de commande (25) communiquent par un signal de communication (S2) modulé sur la tension d'alimentation.

2. Dispositif de réglage longitudinal de siège (1) selon la revendication 1,
**caractérisé en ce que**
le rail (10) comporte au moins un moyen d'entraînement en avant (12) qui peut coopérer avec l'installation d'entraînement (40) pour avoir un mouvement en avant selon l'axe longitudinal (X).

3. Dispositif de réglage longitudinal de siège (1) selon la revendication 1 ou 2,
**caractérisé en ce que**
au moins ce moyen d'entraînement en avant (12) est intégré dans un logement (11).

4. Dispositif de réglage longitudinal de siège (1) selon la revendication 3,
**caractérisé en ce que**
- les moyens d'entraînement en avant (12) comportent au moins une crémaillère (13), et
- l'installation d'entraînement (40) comporte au moins deux éléments d'entraînement en avant (42) pour générer un mouvement en avant dans la direction longitudinale (X), les éléments d'entraînement pouvant être embrayés et débrayés successivement avec la crémaillère (13).

5. Dispositif de réglage longitudinal de siège (1) selon l'une des revendications précédentes,
**caractérisé en ce que**
au moins ce conducteur (50) comprend au moins un rail conducteur (52) réalisé selon l'axe longitudinal (X) du rail (10) et un contact glissant ou frottant (54) réalisé sur le chariot (20) qui coopèrent électriquement.

6. Dispositif de réglage longitudinal de siège (1) selon la revendication 5,
**caractérisé en ce que**
le rail conducteur (52) est prévu sur le rail (10) selon l'axe longitudinal X notamment au voisinage de la crémaillère (13).

7. Dispositif de réglage longitudinal de siège (1) selon l'une des revendications précédentes,
**caractérisé en ce que**
la tension d'alimentation est un courant continu.

8. Dispositif de réglage longitudinal de siège (1) selon l'une des revendications précédentes,
**caractérisé en ce que**
le signal de communication (S2) modulé est un signal modulé en fréquence et/ou en phase.

9. Dispositif de réglage longitudinal de siège (1) selon l'une des revendications précédentes,
**caractérisé en ce que**
la première unité de commande (15) comporte une interface pour recevoir des ordres, de préférence d'une unité ECU, par un bus CAN ou LIN.

10. Dispositif de réglage longitudinal de siège (1) selon l'une des revendications précédentes,
**caractérisé en ce que**
la première unité de commande (15) est une commande maître.

11. Dispositif de réglage longitudinal de siège (1) selon l'une des revendications précédentes,
**caractérisé en ce que**
la seconde unité de commande (25) est au moins une commande esclave pour l'installation d'entraînement (40).

12. Dispositif de réglage longitudinal de siège (1) selon l'une des revendications précédentes,
**caractérisé en ce que**
la seconde unité de commande (25) comporte au moins une seconde commande esclave pour un réglage de l'appui lombaire, un réglage de la hauteur de l'assise, un réglage d'accoudoir, le chauffage du siège et/ou une installation de massage.

13. Dispositif de réglage longitudinal de siège (1) selon l'une des revendications précédentes,
**caractérisé en ce que**
la seconde unité de commande (25) transmet les signaux de capteur à la première unité de commande (15).

14. Dispositif de réglage longitudinal de siège (1) selon l'une des revendications précédentes,
**caractérisé en ce que**
l'installation d'entraînement (40) comporte un encodeur (46) et,
à l'aide de l'encodeur (46) on détermine la position du chariot (20) selon l'axe longitudinal (X) et/ou on saisit la position du chariot (20) sur le rail (10) selon l'axe longitudinal (X) en mesurant le temps de parcours du signal de communication (S2).

15. Procédé pour gérer un dispositif de réglage longitudinal de siège (1) notamment un dispositif de réglage longitudinal de siège (1) avec les caractéristiques de la revendication 1,
**caractérisé par** les étapes de procédé consistant à :
- recevoir un signal de commande (S) par la première unité de commande (15),
- moduler le signal de commande (S) comme signal de communication (S2) sur la tension d'alimentation (S1),
- recevoir et démoduler le signal de communication (S2) par la seconde unité de commande (25), et
- convertir le signal de commande (S) par la commande de l'installation d'entraînement (40) pour déplacer le chariot (20) selon l'axe longitudinal (X) du rail (10) par la seconde unité de commande (25) avec la tension d'alimentation.

16. Procédé selon la revendication 15,
**caractérisé en ce que**
on saisit une position du chariot (20) selon l'axe longitudinal (X) sur le rail (10) à l'aide du temps de parcours du signal de commande (S1), modulé.

17. Véhicule automobile comportant au moins un dispositif de réglage longitudinal de siège (1) selon l'une des revendications 1 à 14.
